**Europäisches Patentamt**

**European Patent Office**

**Office européen des brevets**

(19)

(11) Publication number : **0 393 739 B1**

# EUROPEAN PATENT SPECIFICATION

(12)

(45) Date of publication of patent specification :
24.11.93 Bulletin 93/47

(51) Int. Cl.⁵ : **A23C 15/16, A23D 7/02**

(21) Application number : **90200777.2**

(22) Date of filing : **02.04.90**

(54) Improvements in butter spreads.

(30) Priority : **20.04.89 GB 8908941**

(43) Date of publication of application :
**24.10.90 Bulletin 90/43**

(45) Publication of the grant of the patent :
**24.11.93 Bulletin 93/47**

(84) Designated Contracting States :
**AT BE CH DE DK ES FR GB GR IT LI NL SE**

(56) References cited :
**EP-A- 0 063 389**
**EP-A- 0 276 517**
**THE AUSTRALIAN JOURNAL OF DAIRY
TECHNOLOGY vol. 35, no. 2, June 1980,
PARKVILLE, VICTORIA, AUSTRALIA pages 47
- 53; R.E.TIMMS: "The Phase Behaviour and
Polymorphism of Milk Fat, Milk Fat fractions
and Fully Hardened Milk Fat"**

(73) Proprietor : **UNILEVER N.V.**
**Weena 455**
**NL-3013 AL Rotterdam (NL)**

(84) **BE CH DE DK ES FR GR IT LI NL SE AT**
Proprietor : **UNILEVER PLC**
**Unilever House Blackfriars P.O. Box 68**
**London EC4P 4BQ (GB)**

(84) **GB**

(72) Inventor : **Lanting-Marijs, Jacqueline Adrienne**
**Wipperspark 88**
**NL-3141 RD Maassluis (NL)**
Inventor : **Cain, Frederick William**
**Dr. Blookerstraat 12**
**NL-2271 VL Voorburg (NL)**
Inventor : **Schotel, Ronald Albert**
**Thomas A. Kempisstraat 160**
**NL-3132 CK Vlaardingen (NL)**

(74) Representative : **Mulder, Cornelis Willem
Reinier, Dr. et al**
**UNILEVER N.V. Patent Division P.O. Box 137**
**NL-3130 AC Vlaardingen (NL)**

## Description

The present invention relates to improvements in butter-containing spreads which have a reduced fat content.

Butterfat-containing spreads include the so-called "low-calorie butters" or "LOCABU" products. These generally comprise around half the fat found in traditional butter, that is to say, they contain around 40% butterfat on product, and have enjoyed considerable commercial success for some years. While it has been suggested that such products should be manufactured simply by replacing a portion of the fat in butter with a suitable aqueous phase, known products made according to such simple formulations suffer from certain disadvantages.

It is believed that one particular disadvantage arises from the absence of solid fats in reduced fat products. Butter contains quite a high proportion of solid fat at normal temperatures; around 15-20% of the fat-phase in butter is solid at 20°C, that is, at the normal temperature of use. When butter is placed in the mouth a part of this solid fat melts, and adsorbs heat producing a cool sensation on the palate. Any reduction the total fat content proportionally lowers the solid fat content and therefore attenuates this "cool-melting" property.

In order to overcome this problem it has been suggested to add a butter stearin to the fat blend used in the product. European Patent 063389 discloses spreads comprising liquid (vegetable) oil and butter-stearin. A further advantage of this approach is that the butter-olein fraction, which is commercially valuable, can be used for other purposes, and the butter-stearin, often described as having little use, can be used in the preparation of spreads.

However, in the presence of such a butter-stearin the products become brittle at refrigerator temperatures. The technical problem is therefore to obtain a product which has a low hardness at low temperatures, i.e is not brittle, and a high solids content.

A convenient measure of the solids content of a fat is given by the so-called "N-value", which is the percentage of solids fat as measured at a stipulated temperature. A suitable method for measurement of N-value is given in Journal of the American Oil Chemists Society, 51, 1975, 316 (Van Putte et al.).

A convenient measure of the hardness of a fat is given by the so-called "C-value" as measured at a stipulated temperature. A suitable method for measurement of the C-value is given in Journal of the American Oil Chemists Society, 36, 1959, 345 (Haighton et al.).

We have determined that the brittleness problem can be solved by distributing the butter-stearin inhomogeneously through the spread.

According to the present invention there is provided an edible spread, comprising from 35-50% by weight of a fat phase and from 50-65% by weight of a dispersed aqueous phase, said fat phase comprising both butter-stearin and whole butter fat, said aqueous phase including a gelling or thickening agent, characterised in that said butter-stearin in the fat phase is distributed inhomogeneously and the C-value of the spread divided by the square of the N-value of the total fat phase as measured at 10°C is less than 0.35.

Products according to the present invention do not only have a sufficiently high solids fat content to overcome the problem previously noted, but have improved spreadability and sufficient hardness without being brittle.

Typically, N-values as measured as 10°C for the product are above 50%, and can approach 60%. For comparison the N-10 of whole butterfat is of variable magnitude with an average around 50%. It is believed that there is a complex relation between C-values and N-values when the N-value is above 50% and under these circumstances the C-value increases dramatically.

According to a further aspect of the present invention there is provided a process for the preparation of edible spreads which comprises:

a) preparing a pre-crystallized, viscous, cream-like, oil-in-water emulsion of butter-stearin in a gelling or thickened aqueous phase, and,
b) separately preparing a fat-continuous emulsion of whole butterfat and a dispersed aqueous phase, and,
c) mixing the products of steps (a) and (b) under conditions of shear.

Preferably the mixing ratio of the butter-stearin cream of step (a) and the fat-continuous emulsion of step (b) is 25-40:75-60. While lesser amounts of the butter-stearin cream can be added, the advantage of the invention will be diminished as the butter-stearin cream content is decreased. At higher levels of butter-stearin cream it is difficult to produce fat continuous products.

In an embodiment of the invention mixing is performed at a temperature of 1-15°C so as to ensure that the fat of the cream is to a large extent crystallised.

In embodiments of the invention the aqueous phase viscosity of the butter-stearin cream of step (a) is greater than 50mPa.s at 20°C as measured at a shear rate of 180 rpm, after a resting period of 30 min.

A suitable test can be performed in a HAAKE (RTM) RV3 viscometer using a type MV2P cup and bob at a shear rate of 181 rpm. In the test used herein the temperature of the aqueous phase was originally 40°C and the temperature of the cup was 20°C. The aqueous phase was allowed to cool (in the cup) to 20°C before the viscosity was determined.

Such a viscosity can be obtained by the presence of gelling agents. Suitable gelling agents include gelatine, milk proteins, and mixtures of gelatine and caseinates.

Preferably the butter-stearin is obtained by fractionation of whole butterfat at a temperature of 20-25°C, to obtain a butter-stearin with a solids content at 5°C of greater than 65%.

In order that the present invention may be further understood it will be described by means of an example and with reference to the accompanying graph as mentioned in the text below.

## EXAMPLES:

A fat continuous emulsion of butterfat and waterphase was prepared as follows: a premix of 40% anhydrous unfractionated butterfat and 60% an aqueous phase comprising 3% sodium caseinate and 2% gelatine on weight of premix was prepared. 0.2% of a monoglyceride emulsifier and 0.2% of lecithin were employed in the premix. In addition the premix contained 0.1% carboxymethyl cellulose to avoid flocculation of the proteins, 0.2% salt and 0.16% K-sorbate as preservative. A trace of β-carotene was added as colour and the premix acidified to a pH of 5.1 with lactic acid.

This premix was processed at "micro-scale" through a Votator (RTM) A-unit operating at 1000 RPM with an exit temperature of 9°C and a Votator (RTM) C-unit, operating at 1500 RPM with an exit temperature of 25°C. It should be understood that for A and C-units of larger capacity some variation of power input and rotor speed will be required as is well understood in the art.

Separately from the production of the fat-continuous emulsion, a waterphase continuous cream was prepared with an identical composition other than that the thickeners were varied as described below and anhydrous butter-stearin was employed instead of butterfat. This butter-stearin had been obtained by fractionation of butterfat at 20-25°C and had an N5 greater than 65%. The stearin is described in more detail below. It should be noted that where the caseinate level is above 3% neutral pH was employed instead of the pH 5.1 mentioned above and otherwise used.

Any viscosity measurements were made at the pH of the cream rather than at constant pH. This cream was homogenised in a Rannie two stage high-pressure homogeniser at a pressure drop of 6 bar per stage, at a temperature of 65°C and with a residence time of six minutes to obtain a stable cream with a relatively small drop size (3-5 microns estimated) and processed through a single A-unit operating at 300 RPM with an exit temperature of 12°C.

These two separate process streams were combined in a ratio of 70% fat-continuous stream to 30% water-continuous (cream) stream. Mixing was performed in an A-unit operating at 500 RPM with an exit temperature of 14°C. It is noted that the cream should be cooled to as low a temperature as possible so as to solidify the maximum content of fat, and the fat continuous emulsion should be as cold as possible to avoid melting the stearin by heat transfer. However, the two streams need not be at the same temperature when combined.

Following mixing the product stream was fed through a Votator (RTM) B-unit and packed.

The butter stearin was obtained by dry fractionation of whole butterfat at 22°C recovering the solid fat. The N-line of the butterfat was N-5 75%, N-10 70%, N-20 48%, N-30 29% and N-35 of 17% measured by the standard Nuclear Magnetic Resonance method given above after a 16 hour stabilization period at 0°C.

The thickeners were varied as shown in the accompanying graph, in which the sodium caseinate content of the butter-stearin cream is plotted along the horizontal axis while the gelatine content of the butter-stearin cream is plotted on the vertical axis. All percentages are expressed in weight% of the butter-stearin cream. Hollow markers indicate formulations with which no fat continuous product could be made. Filled markers indicate formulations with which a fat-continuous product could be made. Continuity of the fat phase was determined by conductivity measurements. Half-filled markers gave a product of less than optimal quality. The numerals given on the graph are viscosity of the butter-stearin cream reached after 30 minutes at 20°C.

It can be seen that stable products could not be made in the hatched region, that is the region in which the viscosity did not reach the required value after a suitable resting period.

It is believed that unless the minimum viscosity in the aqueous phase of the butter-stearin cream is reached in the time stipulated the products will not be fat continuous and therefore prone to microbiological spoilage.

It was also noted that products which were not fat-continuous had a sub-optimal texture.

The products of the present invention were more plastic than conventional low-calorie butters but less plastic than butter.

The N-values of the fat-continuous products were measured and found to be consistently around 56.0 at a temperature of 10°C.

In a comparative experiment in which the split stream process of the present invention was not employed, but all the ingredients were combined together in a single stream, an identical N-value was obtained, as expected. However, the C-value at 10°C of the present products was around 665 compared with a C-value measured under identical conditions of 1210 in the control.

The $C/N^2$ at 10°C of the product was 0.21 compared with 0.38 at the same temperature in the control. For reference, the $C/N^2$ at 10°C of dairy butter is in the region of 0.80. For butterfat containing products low values of $C/N^2$ give softer and more readily frigo-spreadable products. These figures are reproduced in table 1 below.

### TABLE 1.

|  | C-value (10°C) | N-value (10°C) | $C/N^2$ |
|---|---|---|---|
| Butterfat |  |  |  |
| Butter (80%) | 2000 | 50.0 | 0.80 |
| LOCABU (40%) | 1180 | 50.0 | 0.47 |
| + stearin |  |  |  |
| Control (40%) | 1210 | 56.0 | 0.38 |
| Embodiment (40%) | 665 | 56.0 | 0.21 |

Current 40% fat low calorie butters in which whole butterfat is used as the sole component of the fat phase (N10 = 50), have a $C/N^2$ at 10°C of 0.47 for a typical C-value at 10°C of 1180. An example of one such product is inserted in table 1 at "LOCABU". It can be seen from the table that the addition of butter-stearin lowers the overall C-value of the product when the product is made according to the method of the present invention, but increases the overall C-value when the methods of the prior art are employed.

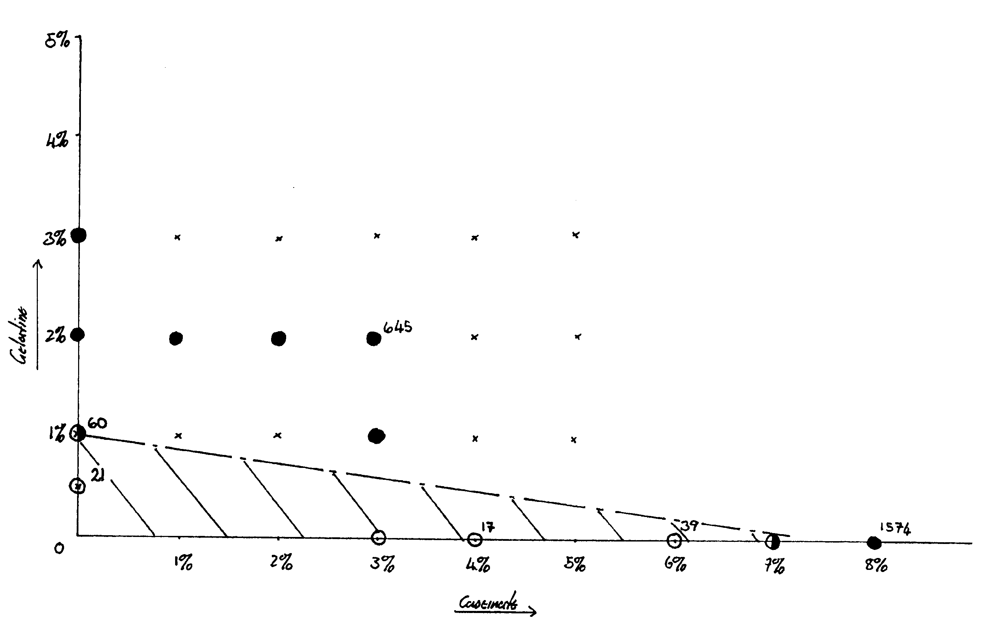

## Claims

1. An edible spread, comprising from 35-50% by weight of a fat phase and from 50-65% by weight of a dispersed aqueous phase, said fat phase comprising both butter- stearin and whole butter fat, said aqueous phase including a gelling or thickening agent, characterised in that said butter-stearin in the fat phase is distributed inhomogeneously and the C-value of the spread divided by the square of the N-value of the total fat phase as measured at 10°C is less than 0.35.

2. A spread according to claim 1, wherein the N-value of the total fat phase as measured at 10°C falls in the range 50-60%.

3. A spread according to claim 1 wherein the butter-stearin is that obtained by fractionation of whole butterfat at a temperature of 20-25°C, to obtain a butter-stearin with a solids content at 5°C of greater than 65%.

4. A spread according to claim 1 wherein the gelling or thickening agent is selected from the group comprising gelatine, milk proteins and mixtures thereof.

5. A process for the preparation of an edible spread according to claim 1, which comprises:
   a) preparing a pre-crystallized, viscous, cream-like, oil-in-water emulsion of butter-stearin in a gelling or thickened aqueous phase, and,
   b) separately preparing a fat-continuous emulsion of whole butterfat and a dispersed aqueous phase, and,
   c) mixing the products of steps (a) and (b) under conditions of shear.

6. A process according to claim 6 wherein in step (c) the mixing ratio of the butter-stearin cream of step (a) and the fat-continuous emulsion of step (b) is 25-40:75-60.

7. A process according to claim 6 wherein the aqueous phase viscosity of the butter-stearin cream of step (a) is greater than 50mPa.s at 20°C as measured at a shear rate of 180 rpm, after a resting period of 30 min.

8. A process according to claim 6 wherein step (c) is performed at a temperature of 1-15°C.

**Patentansprüche**

1. Eßbarer Aufstrich, umfassend 35 bis 50 Gew.-% einer Fettphase und 50 bis 65 Gew.-% einer dispergierten wäßrigen Phase, wobei die Fettphase sowohl Butterstearin als auch Vollbutterfett umfaßt und die wäßrige Phase ein Gelier- oder Verdickungsmittel einschließt, dadurch gekennzeichnet, daß das Butterstearin in der Fettphase inhomogen verteilt ist und der C-Wert des Aufstrichs, dividiert durch das Quadrat des N-Wertes der gesamten Fettphase, gemessen bei 10°C, weniger als 0,35 beträgt.

2. Aufstrich nach Anspruch 1, worin der N-Wert der gesamten Fettphase, genessen bei 10°C, in den Bereich von 50 bis 60 % fällt.

3. Aufstrich nach Anspruch 1, worin das Butterstearin durch Fraktionieren von Vollbutterfett bei einer Temperatur von 20 bis 25°C zur Bildung eines Butterstearins mit einem Feststoffgehalt bei 5°C größer als 65 % erhalten

4. Aufstrich nach Anspruch 1, worin das Gelier- oder Verdickungsmittel aus der Gelatine, Milchproteine und Mischungen davon umfassenden Gruppe ausgewählt ist.

5. Verfahren zur Herstellung eines eßbaren Aufstrichs nach Anspruch 1, das umfaßt:
   a) Herstellen einer vorkristallisierten, viskosen, sahneartigen Öl-in-Wasser-Emulsion von Butterstearin in einer gelierenden oder verdickenden wäßrigen Phase und
   b) getrenntes Herstellen einer fettkontinuierlichen Emulsion aus Vollbutterfett und einer dispergierten wäßrigen Phase und
   c) Mischen der Produkte aus den Schritten (a) und (b) unter Scherbedingungen.

6. Verfahren nach Anspruch 6, worin in Schritt (c) das Mischungsverhältnis der Butterstearinsahne von Schritt (a) und der fettkontinuierlichen Emulsion von Schritt (b) 25 bis 40:75 bis 60 beträgt.

7. Verfahren nach Anspruch 6, worin die Viskosität der wäßrigen Phase der Butterstearinsahne von Schritt (a) nach einer Ruheperiode von 30 min größer als 50 mPa.s bei 20°C, gemessen bei einer Schergeschwindigkeit von 180 U/min, ist.

8. Verfahren nach Anspruch 6, worin Schritt (c) bei einer Temperatur von 1 bis 15°C durchgeführt wird.

**Revendications**

1. Produit à tartiner comestible comprenant de 35 à 50% en poids d'une phase grasse et de 50 à 65% en poids d'une phase aqueuse dispersée, ladite phase grasse comprenant à la fois de la stéarine de beurre et de la graisse de beurre entier, ladite phase aqueuse comprenant un agent gélifiant ou épaississant, caractérisé en ce que ladite stéarine de beurre dans la phase grasse est distribuée de façon non homogène et le quotient de la valeur C du produit à tartiner par le carré de la valeur N de la phase grasse totale qu'on mesure à 10°C est inférieur à 0,35.

2. Produit à tartiner selon la revendication 1, dans lequel la valeur N de la phase grasse totale mesurée à 10°C est comprise entre 50 et 60%.

3. Produit à tartiner selon la revendication 1, dans lequel la stéarine de beurre est celle qu'on obtient par fractionnement de la graisse de beurre entier à une température de 20 à 25°C, afin d'obtenir une stéarine de beurre ayant une teneur en solides à 5°C de plus de 65%.

4. Produit à tartiner selon la revendication 1, dans lequel l'agent gélifiant ou épaississant est choisi parmi la gélatine, les protéines de lait et leurs mélanges.

5. Procédé de préparation d'un produit à tartiner comestible selon la revendication 1, qui consiste :
   a) à préparer une émulsion pré-cristallisée, visqueuse, analogue à la crème, huile-dans-eau de la stéarine de beurre au sein d'une phase aqueuse gélifiante ou épaissie,
   b) à préparer séparément une émulsion grasse continue de graisse de beurre entier et une phase aqueuse dispersée, et
   c) à mélanger les produits des stades a) et b) dans des conditions de cisaillement.

6. Procédé selon la revendication 5, dans lequel au stade c), le rapport de mélange de beurre et de crème de stéarine du stade a) et de l'émulsion grasse continue du stade b) est 25-40/75-60.

7. Procédé selon la revendication 5, dans lequel la viscosité de la phase aqueuse de la crème de stéarine de beurre au stade a) est supérieure à 50 mPa.s à 20°C qu'on mesure à un taux de cisaillement de 180 t/min, après une période de repos de 30 minutes.

8. Procédé selon la revendication 5, dans lequel on exécute le stade c) à une température de 1 à 15°C.